Europäisches Patentamt

**European Patent Office**

Office européen des brevets

(11) Veröffentlichungsnummer: **0 085 848**
**B1**

(12) **EUROPÄISCHE PATENTSCHRIFT**

(45) Veröffentlichungstag der Patentschrift:
21.08.85

(51) Int. Cl.⁴: **B 01 D 53/08,** B 01 D 46/38,
B 01 J 8/12

(21) Anmeldenummer: **83100352.0**

(22) Anmeldetag: **17.01.83**

(54) **Wanderbett-, insbesondere Adsorptionsfilter.**

(30) Priorität: 29.01.82 DE 3202845
03.08.82 DE 3228984

(43) Veröffentlichungstag der Anmeldung:
17.08.83 Patentblatt 83/33

(45) Bekanntmachung des Hinweises auf die Patenterteilung:
21.08.85 Patentblatt 85/34

(84) Benannte Vertragsstaaten:
CH FR IT LI SE

(56) Entgegenhaltungen:
DE - B - 2 501 846
DE - B - 2 625 275
DE - C - 922 345
US - A - 2 656 007

(73) Patentinhaber: KRAFTWERK UNION
AKTIENGESELLSCHAFT, Wiesenstrasse 35,
D-4330 Mülheim (Ruhr) (DE)

(72) Erfinder: Mathewes, Wolfgang, Nelkenweg 75,
D-6300 Giessen (DE)
Erfinder: Hayn, Peter W., Dr., Plassstrasse 8b,
D-1000 Berlin 27 (DE)

(74) Vertreter: Mehl, Ernst, Dipl.-Ing. et al, Postfach 22 01 76,
D-8000 München 22 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Wanderbettfilter zur Reinigung von gas- oder dampfförmigen Medien, insbesondere ein Adsorptionsfilter, gemäß Oberbegriff des Anspruches 1. Sie liegt demgemäß auf dem Gebiet der Filtertechnik und ist bei der konstruktiven Ausgestaltung eines Adsorptionsfilters anzuwenden, bei dem das Adsorptionsmittel, insbesondere in Form von Aktivkohleteilchen mit mm-Abmessungen diskontinuierlich von oben nach unten und das zu filternde Gas kontinuierlich von unten nach oben strömen.

Ein Adsorptionsfilter gemäß Gattungsbegriff ist durch die DE-PS 2 625 275 bekannt. Es besteht aus einem rechteckigen, mit dem Adsorptionsmittel gefüllten Gehäuse und ist mit einer deckseitigen verschließbaren Einlaßöffnung zum Einfüllen des Adsorptionsmittels und mit einem sich nach unten verjüngenden, eine absperrbare Auslaßöffnung für das Adsorptionsmittel enthaltenden Boden versehen. Die Zuführungen für das zu filternde Gas befinden sich im Bodenbereich. Im oberen Bereich des Behälters sind dagegen die Abgasrohre für das gefilterte Gas angeordnet, wobei sich diese von einer Behälterwand zur gegenüberliegenden Behälterwand parallel zueinander erstrecken. Im unteren und oberen Bereich des Behälters sind Einbauten zur Vergleichmäßigung des Fließverhaltens des Adsorptionsmittels über den gesamten Querschnitt des Gehäuses vorgehen. Im oberen Behälterbereich dienen als Vergleichmäßigungs-Einbauten die auf ihren Zu- und Abströmseiten mit einem Dach- oder V-Profil versehenen Abgasrohre, im unteren Behälterbereich bestehen die Einbauten aus einem Tragrost mit über den gesamten Querschnitt regelmäßig verteilt angeordneten rechteckigen Durchtrittsöffnungen für das Adsorptionsmittel und für das zu filternde Gas. Dieser Tragrost ist oberhalb der Entleerungsöffnung für das Adsorptionsmittel und oberhalb der Einlaßöffnungen für das zu filternde Gas angeordnet und soll ein weitgehend gleichmäßiges Absinken des Adsorptionsmittels bei geöffneter Auslaßöffnung bewirken.

Die Erfindung befaßt sich mit einer Weiterentwicklung dieses bekannten Adsorptionsfilters in Richtung auf eine weitere Vergleichmäßigung der Strömung der Filterschicht. Wie gefunden wurde, kommt es dabei auf die fließgünstige Ausbildung und Zuordnung der oberen und unteren Einbauten, ihrer Durchlaßquerschnitte und der Durchsatzstellorgane entscheidend an. Erfindungsgemäß soll eine weitere Verbesserung des Strömungsverhaltens der Filterschicht beim Austausch oder der partiellen Erneuerung derselben im Sinne der angestrebten idealen Strömung in planparallelen Schichten (Kolbenströmung bzw. Massenfluß im Gegensatz zum Kernfluß) erreicht werden.

Bei einem anderen bekannten Adsorptionsfilter nach der GB-PS 588 297 ist im unteren Bereich des Gehäuses ein Tragrost mit dachförmigen Einbauten vorgesehen, wobei zwischen benachbarten Dachkanten geschlitzte, in Sektoren unterteilte drehbare Zylinder (Drehschieber) angeordnet sind, mit denen verbrauchtes Adsorptionsmittel portionsweise abgetragen werden kann. Ein definiertes schichtweises Abtragen des Adsorptionsmittels ist damit nicht möglich. Die Gründe dafür sind folgende: Der Tragrost gestattet nur den durch das Volumen des Drehschiebers begrenzten Austrag je Drehbewegung. Es muß eine Vielzahl von Drehbewegungen ausgeführt werden, um eine Schicht des Schüttgutes auszuschleusen. Da die Drehschieber bei dem bekannten Filter unabhängig voneinander bedient werden können, so kann schon dadurch ein ungleichmäßiges Absenken der einzelnen Schichten innerhalb des Schüttgut- bzw. Filter-Bettes erfolgen.

Bei einem weiterhin bekannten Adsorptionsfilter nach der DE-PS 883 598 wird ein kontinuierliches, gleichmäßiges Absinken des Adsorptionsmittels in der Behandlungszone dadurch angestrebt, daß im unteren Bereich des Behälters eine schleusenartige Einrichtung angeordnet ist, der eine Reguliereinrichtung nachgeschaltet ist. Die schleusenartige Einrichtung besteht aus dachförmigen Leitflächen, die gegebenenfalls jalousieartig ausgestaltet sind, sowie aus Stauflächen, die sich unterhalb benachbarter Dachkanten befinden. Die Staubflächen verhindern einen freien Durchfall des Adsorptionsmittels und gestatten nur ein Abrieseln desselben entsprechend den sich ausbildenden natürlichen Böschungen. Die nachgeschaltete Reguliereinrichtung besteht aus einem feststehenden und einem verschiebbaren Boden, die beide mit Öffnungen versehen sind. Der Überdeckungsgrad der Öffnungen ist einstellbar, wodurch die jeweils gewünschte Adsorptionsmittelmenge ausgetragen werden kann.

Bedingt durch die horizontalen Stauflächen, die im Bereich der Dachlücken zwischen den jalousieartigen Dächern angeordnet sind, können sich sogenannte tote Zonen des Schüttgutes ausbilden, die zu einer ungleichmäßigen Beladung der darüber angeordneten Filterschicht führen. Außerdem wird die Vergleichmäßigungs-Wirkung der schleusenartigen Einrichtung dadurch beeinträchtigt, daß durch die in relativ großem Abstand zur schleusenartigen Einrichtung unterhalb derselben angeordnete Reguliereinrichtung ein Rückstau erzeugt wird, der einen freien Fall des Schüttgutes bzw. Adsorptionsmittels beim Durchgang durch die schleusenartige Einrichtung verhindert. Letztere kann aber ihre vergleichmäßigende Wirkung erst dann voll entfalten, wenn die Partikel nach Passieren derselben zumindest ein kurzes Stück im freien Fall zurücklegen können. Im übrigen umfaßt dieses bekannte Adsorptionsfilter nicht alle Merkmale des Gattungsbegriffes, insbesondere sind keine Abgasrohre vorhanden, die im oberen Bereich des Behälters von einer Behälterwand zur gegenüberliegenden Behälterwand parallel zueinander erstreckend angeordnet sowie auf ihren Zu- und Abströmseiten mit einer Dach- bzw. V-Profilabdeckung versehen sind, so daß deren strömungsvergleichmäßigende Wirkung als symmetrische Fließleitkörper für das Adsorptionsmittel nicht ausgenutzt wird.

Schließlich ist noch auf das Wanderbett-, insbesondere Adsorptionsfilter, nach der US-PS 1 095 676 zu verweisen, welches unterhalb und oberhalb der Filterschicht je einen Tragrost mit achsparallel zueinander angeordneten T-Schienen, zwischen den Schienen angeordneten Durchlaß-Längsschlitzen und oberhalb der Längsschlitze vorgesehenen dachförmigen Fließleitkörpern (mit umgekehrtem V-Profil) aufweist, wobei sich oberhalb der T-Schienen im Mündungsbereich der Fließleitkörper unterhalb letzterer parallel zu den T-Schienen Steuerleisten erstrecken, welche mit Querstäben verbunden sind. Die Querstäbe und damit die Steuerleisten können mittels Exzenter-Antrieben quer zur Längsrichtung der Längsschlitze hin und her bewegt werden und sollen bewirken, daß das Schüttgut, das auf der Staufläche der T-Schienen aufgrund des Schüttwinkels normalerweise in Ruhe sich befindet, zum Abrieseln gebracht wird. Nachteilig bei diesem bekannten Filter ist vor allem, daß die Gaseintrittszonen (das zu reinigende Gas strömt von unten nach oben) im Bereich der Böschungen des Schüttgutes liegen, so daß einerseits die Rieselbewegung des Schüttgutes durch die Gasströmung beeinträchtigt wird, andererseits gerade in diesem Bereich sich eine sehr starke Beladung ergibt, wogegen andere Filterzonen weniger stark beladen werden.

Der Erfindung liegt die Aufgabe zugrunde, ein Wanderbett, insbesondere Adsorptionsfilter, gemäß Gattungsbegriff so auszubilden, daß die geschilderten Nachteile und Schwierigkeiten der vorstehend beschriebenen bekannten Filter vermieden sind, d. h. insbesondere, das Innere des Filterbehälters so auszugestalten, daß

— die Fließbewegung des Schüttgutes durch die Gasströmung nicht beeinträchtigt ist,
— keine ungleichmäßige Beladung des Schüttgutes im Einströmbereich des Tragrostes erfolgen kann;
— sich keine toten Zonen des Schüttgutes im Bereich des Tragrostes ausbilden können,
— ein Rückstau des Schütt- bzw. Filtergutes vom Bodenbereich des Filterbehälters zum Tragrost mit seinen Durchsatzstellorganen vermieden ist und daß somit, positiv ausgedrückt,
— das neue Wanderbett-, insbesondere Adsorptionsfilter, im Bezug auf die wirtschaftliche Verwendung des eingesetzten Adsorptionsmittels verbessert werden und bei konstanter Höhe der wirksamen Filterschicht immer ein schichtweiser Abzug des Adsorptionsmittels von oben nach unten und eine gleichmäßige Beladung der Filterschicht von unten nach oben erfolgen kann.

Erfindungsgemäß wird die gestellte Aufgabe bei einem Wanderbett-, insbesondere Adsorptionsfilter gemäß Gattungsbegriff, durch die im Kennzeichen des Anspruchs 1 angegebenen Merkmale gelöst. Vorteilhafte Weiterbildungen sind in den Unteransprüchen 2 bis 13 angegeben.

Bei einem derart ausgebildeten Filter gewährleisten zunächst die als Fließleitkörper ausgebildeten Abgasrohre, daß der darüber befindliche Vorrat des Adsorptionsmittels gleichmäßig verteilt in den wirksamen bzw. aktiven Bereich des Filters einströmt bzw. einrieselt. Die jalousierartig dachförmigen Einbauten im unteren Teil des Behälters verhindern bei geöffneten Schiebern Brückenbildungen im abrieselnden Adsorptionsmittel sowie das Auftreten eines sogenannten Kernflusses, bei dem Adsorptionsmittel aus bestimmten Querschnittsbereichen bevorzugt abströmt. Der durch eine gleichmäßige und relativ geringe Sinkgeschwindigkeit gekennzeichnete, erwünschte Massenfluß des Adsorptionsmittels wird weiterhin dadurch gewährleistet, daß durch Integration der Schieber in die jalousieartig dachförmigen Einbauten des Tragrostes darunter ein freier Raum gebildet ist, in dem das Adsorptionsmittel bei geöffneten Schiebern frei fallen kann. Dabei bildet sich zwischen den jalousieartig dachförmigen Einbauten ein dynamisches Gewölbe aus abrieselndem Abdsorptionsmittel. Hierbei ist vorausgesetzt, daß das Volumen im Bodenbereich des Gehäuses größer ist als das Volumen der jeweils aus dem aktiven Filterbereich abzuziehenden Teilschicht des Adsorptionsmittels. Wenn hier wie im folgenden von Adsorptionsmitteln die Rede ist, so versteht es sich, daß es sich dabei statt dessen oder auch um regenerierbare Filterstoffe oder Katalysatoren handeln kann; dementsprechend erstreckt sich die Erfindung allgemein auf Wanderbettfilter zur Reinigung von oder zur Reaktion mit gas- oder dampfförmigen Medien, die mit kontinuierlichem oder intervallmäßigem Durchfluß der Filtermasse betrieben werden können. Bevorzugt handelt es sich indessen um ein Adsorptionsfilter, wie es für industrielle Anlagen, z. B. Kernkraftanlagen, von besonderer Bedeutung ist.

Durch die erfindungsgemäße Konstruktion ist dabei gewährleistet, daß verbrauchtes Adsorptionsmittel schichtweise aus dem Adsorptionsfilter separiert und besonders gut ausgenutzt werden kann.

Im folgenden werden die konstruktiven Ausgestaltungen nach den Unteransprüchen grundsätzlich erläutert:

Zunächst empfiehlt es sich, die Breite der Dachlücken je nach Größe des Adsorptionsfilters im Bereich zwischen 15 und 50 mm zu wählen (Anspruch 2). Die obere Dachlücke zwischen zwei benachbarten jalousieartigen Dächern sollte dabei 50 bis 100 mm betragen (Anspruch 3). Diesen Abmessungen entspricht ein Achsabstand der dachförmigen oberen Abdeckungen und der dachförmigen Einbauten von 100 bis 500 mm. Kleine Achsabstände begünstigen dabei die gleichmäßige Verteilung und ein gleichmäßiges Absinken des Adsorptionsmittels. Die Korngröße des Adsorptionsmittels, insbesondere Aktivkohlekörper, liegt dabei im mm-Bereich. Bevorzugt werden kleine Zylinderkörper von 1 bis 2 mm Länge und 1 bis 2 mm Durchmesser verwendet; es kann sich aber auch um Bruchkohle etwa gleicher Korngröße handeln.

Die Dachlücken zwischen den jalousieartigen Dächern und/oder den oberen Abdeckungen können weiterhin vom Rand zur Mitte des Behälters hin angenähert hyperbolisch verengt sein (Anspruch 4). Dadurch wird Reibungsverlusten Rechnung getragen, die sich beim Absinken des Adsorptionsmittels an den Behälterwänden ergeben.

Der erwünschte Massenfluß des Adsorptionsmittels kann weiterhin durch Fließleitkörper begünstigt werden, die zwischen den firstartigen Oberteilen der jalousieartigen Dächer und zwischen diesen Oberteilen und den Behälterwänden anzuordnen sind (Anspruch 5). Diese zusätzlichen Fließleitkörper können spitzdachartig oder im Querschnitt als auf die Spitze gestelltes Quadrat oder vieleckig oder rund ausgebildet sein (Anspruch 6). Sie vergleichmäßigen im Bereich der unteren Einbauten die Weglängen, die die einzelnen Partikel des Adsorptionsmittels während eines Entleerungsvorganges nehmen.

Weiterhin können der Massenfluß und der erwünschte freie Fall des Adsorptionsmittels zwischen den jalousieartig dachförmigen Einbauten und dem Boden des Behälters durch die Formgebung und die Öffnungs- und Schließbewegung der Schieber verbessert werden. Dazu sind die Schieber auf beide Seiten der jeweiligen Dachlücken verschiebbar (Anspruch 9). Um hierbei alle Zonen im Bereich eines Schlitzes untereinander gleichmäßig durch den Schieber zu beeinflussen, ist eine Schieberbewegung besonders vorteilhaft, bei der die Schieber beim Freigeben der Dachlücken abwechselnd auf die eine Seite und auf die andere Seite der Schlitze verschiebbar sind (Anspruch 10). Bei diesem Verschieberhythmus wird also zunächst jeder Schlitz durch eine Bewegung des Schiebers z. B. nach links freigegeben, danach durch eine Bewegung nach rechts geschlossen. Später wird jeder Schlitz durch eine Bewegung nach rechts geöffnet und anschließend durch eine Bewegung der Schieber nach links angeschlossen. Eine solche Bewegung der Schieber ist insbesondere dann von Bedeutung, wenn Adsorptionsmittelschichten geringer Höhe aus dem Adsorptionsfilter abgezogen werden sollen.

Hinsichtlich der konstruktiven Ausgestaltung der Schieber ist es von Vorteil, wenn jeder Schieber von dem Querstück eines T-förmigen Profilkörpers gebildet wird (Anspruch 11). Hierdurch werden Stauwirkungen des abrieselnden Adsorptionsmittels an einer eventuell vorhandenen Seitenwand des Schiebers unterdrückt, und der Fließkegel unterhalb der Schlitze zwischen den jalousieartig dachförmigen Einbauten kann sich störungsfrei ausbilden.

Um in der Sperrstellung der Schieber ein Abrieseln von Adsorptionsmittel zwischen den Dachkanten des Tragrostes und dem Schieber zu unterbinden, empfiehlt es sich weiterhin, die unteren Dachkanten der jalousieartigen Dächer mit auf den Schiebern aufsitzenden schmalen Bürsten zu versehen. Die Bürsten ermöglichen dann gleichzeitig einen Durchtritt des zu reinigenden Gases im Bereich der Schieber.

Im folgenden wird anhand der Zeichnung, in der vier Ausführungsbeispiele der Erfindung dargestellt sind, diese noch näher erläutert. Darin zeigt, teils vereinfacht und schematisch

Fig. 1 im Querschnitt ein Adsorptionsfilter nach der Erfindung;

Fig. 2 den Tragrostbereich des Filters, vergrößert, mit einer abgewandelten Ausführung der Schieber;

Fig. 3 bis 5 in schematischer Darstellung den Bewegungsrhythmus der Schieber nach Fig. 2, wobei die unteren Dachkanten des Tragrohres mit mit den Schiebern zusammenarbeitenden Bürsten versehen sind und

Fig. 6 in einem Grundriß des Tragrostes die hyperbolische Form seiner Dachlücken.

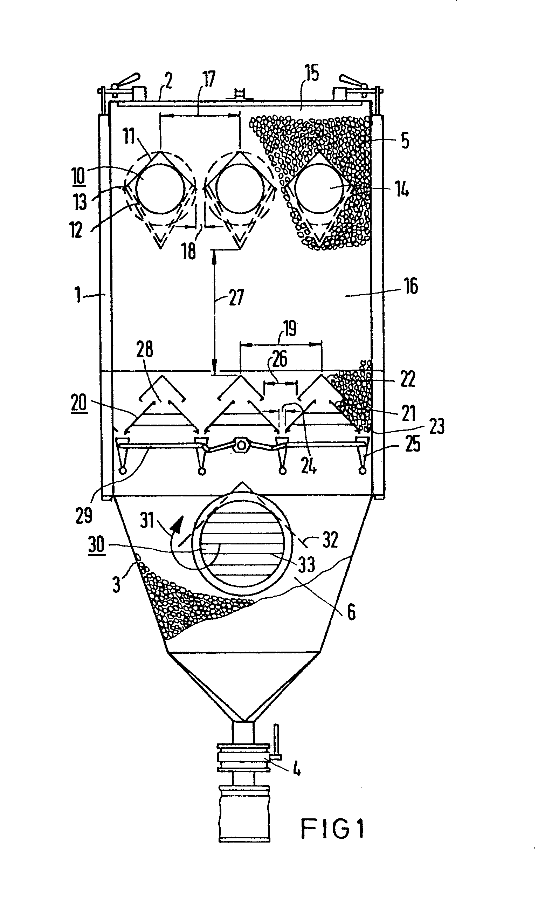

Fig. 1 zeigt im Querschnitt ein als Schüttgutfilter ausgebildetes Adsorptionsfilter, bei dem die aktive Schichthöhe des Adsorptionsmittels aus Sicherheitsgründen ein Mehrfaches der theoretischen Mindestschichthöhe beträgt. Ein solches Filter weist einen hohen Ausnutzungsgrad des Adsorptionsmittels auf, wenn jeweils nur diejenige Schicht des Adsorptionsmittels abgelassen wird, die tatsächlich verbraucht ist. Dies setzt voraus, daß das Adsorptionsmittel in der aktiven Zone des Filters über den gesamten Querschnitt gleichmäßig absinkt und daß frisches Adsorptionsmittel in die aktive Zone gleichmäßig nachrieselt. Dann kann der Abzug des verbrauchten Adsorptionsmittels ein- oder mehrmals ohne Abschaltung der Anlage während des Betriebes erfolgen.

Das dargestellte Filter eignet sich besonders zur Reinigung kontaminierter, beispielsweise mit radioaktivem Jod angereicherter Luft in einem Kernkraftwerk und wird hierzu zweckmäßig mit einer speziell präparierten Aktivkohle beschickt. Die vorgesehene Filterkonstruktion gewährleistet dabei sowohl einen über den Querschnitt gleichmäßig verteilten Durchzug der zu reinigenden Luft als auch eine planparallele, gleitreibungsfreie Zu- und Abführung des Adsorptionsmittels im Bereich der aktiven Zone.

Das dargestellte Adsorptionsfilter besteht im wesentlichen aus dem kastenartigen Behälter oder Gehäuse 1 mit dem verschließbaren Deckel 2 und dem sich nach unten konisch verjüngenden, trichterartigen Boden 3 mit einer Auslaßöffnung und zugeordnetem Verschluß 4, aus den oberen Einbauten (Abgasrohren) 10, den unteren Einbauten (Tragrost) 20 und einer Gaszuführung 30. Das Adsorptionsmittel 5 befindet sich im wesentlichen im Bereich zwischen den unteren Einbauten 20 und dem Deckel 2 und füllt den Raum zwischen den unteren Einbauten 20 und den oberen Einbauten 10 voll aus. Anstelle des de- und remontablen Deckels 2, könnte allgemein eine verschließbare Einlaßöffnung vorgesehen sein, z. B. ein Durchsatzstellorgan im engsten Querschnitt einer konisch oder pyramidenförmig verjüngten Zulaufkammer.

Das zu reinigende Gas gelangt gemäß dem Pfeil 31 über die Gaszuführung 30 in das Filter, wobei der Zuführungsstutzen der Gaszuführung gegen herabfallende Adsorptionsmittel mit einem spitzen Dach 32 und einem großflächigen Sieb 33 geschützt ist. Aus dem Filter wird das Gas mittels der oberen Einbauten 10 abgeführt, bei denen es sich um mehrere parallel zueinander angeordnete und sich von der vorderen zur hinteren Gehäusewand erstreckende Abgasrohre handelt. Diese bestehen aus einer oberen dachförmigen Abdeckung 11 und einer nach unten gerichteten, V-förmigen, siebartigen Abdeckung 12, wobei die Dachkanten 13 jeder oberen Abdeckung die jeweilige nach unten gerichtete Abdeckung überragen. Die Abgasrohre 10 sind an Sammelrohre 14 angeschlossen, die mit nicht näher bezeichneten Flanschen an der hinteren Gehäusewand befestigt sind.

Die Abgasrohre 10 bilden gleichzeitig Fließleitkörper zur gleichmäßigen Verteilung des im Vorratsraum 15 befindlichen Adsorptionsmittels 5 in den Adsorptionsraum 16 hinein. Ihr Achsabstand 17 liegt hierzu je nach Baugröße im Bereich zwischen 100 und 500 mm, wobei dieser Achsabstand etwa das Sechsfache der Dachlücke 18 zwischen zwei benachbarten Fließleitkörpern bzw. zwischen einem Fließleitkörper und der Behälterwand beträgt. Der halbe Spitzenwinkel (Schnittfläche einer Dachfläche mit der Senkrechten), der wegen eines günstigen Reibungskoeffizienten aus Edelstahlblech bestehenden dachförmigen Abdeckungen 11 beträgt etwa 45°, der Spitzenwinkel demnach etwa 90°, wobei dieser Spitzenwinkel größer ist als der Spitzenwinkel der V-förmigen Abdeckung 12. Der zum halben Spitzenwinkel komplementäre Neigungswinkel der dachförmigen Abdeckungen 11 beträgt dementsprechend ebenfalls ca. 45°, der komplementäre Steigungswinkel der V-förmigen Abdeckungen 12 ist entsprechend größer. Bei einer anderen Materialwahl sind die Spitzenwinkel dem entsprechenden Reibungsbeiwert anzupassen.

Das von oben eingefüllte Adsorptionsmittel trifft im unteren Bereich des Gehäuses 1 auf die unteren Einbauten in Form eines Tragrostes 20, bei dem es sich um Konstruktionselemente zum Tragen des Adsorptionsmittels, zum gleichmäßigen Einleiten des zu reinigenden Gases in den Adsorptionsraum 16 und zum gleichmäßigen Abtragen einer verbrauchten bzw. beladenen Schicht des Adsorptionsmittels handelt. Der Tragrost 20 besteht zunächst aus jalousieartig zweiteiligen symmetrischen Dächern mit einem trapezförmigen Unterteil 21 und einem firstartigen Oberteil 22. Sie sind jeweils senkrecht unter einem Abgasrohr 10 und parallel zu diesem derart angeordnet, daß ihre Achsabstände 19 ebenfalls etwa das Sechsfache der unteren Dachlücken 24 zwischen zwei benachbarten jalousieartigen Dächern bzw. zwischen einem jalousieartigen Dach und der angrenzenden Gehäusewand betragen. Die jeweilige Gehäusewand ist dabei zweckmäßig mit dem unteren Ansatz 23 eines trapezförmigen Unterteiles versehen. Dadurch werden nicht nur zwischen den jalousieartigen Dächern, sondern auch zwischen den äußeren jalousieartigen Dächern und den seitlichen Gehäusewänden (Durchlaß-)Dachlücke 24 (Tragrost) gebildet, die mit untereinander gekoppelten, an der Tragrost-Unterseite angeordneten und dessen axiale Länge überstreichenden Schiebern 25 absperrbar sind.

Das trapezförmige Unterteil 21 und das firstartige Oberteil 22 jedes jalousierartigen Daches 20 haben je nach Baugröße einen senkrechten Abstand von etwa 50 bis 90 mm, während die Dachlücken 26 zwischen den benachbarten firstartigen Oberteilen 50 bis 100 mm betragen. Die unteren Dachlücken 24 entsprechen in ihren Abmessungen den Dachlücken 18 der oberen Einbauten 10.

Die Breite der oberen Schlitze 28 des trapezförmigen Unterteiles 21 beträgt 20 bis 80 mm, wobei diese Schlitze zusammen mit der jalousieartigen Ausgestaltung der unteren Einbauten in bekannter Weise für den Durchtritt des Gases durch den Tragrost 20 vorgesehen sind. Die jalousieartige Ausgestaltung des Tragrostes bewirkt weiterhin eine Pulsation und Auflockerung des Adsorptionsmittels bei einer Abwärtsbewegung und wirkt damit einer Brückenbildung beim Abziehen des Adsorptionsmittels entgegen.

Der halbe Spitzenwinkel und dementsprechend der Neigungswinkel aller Dachschrägen des Tragrostes 20 betragen etwa 45°. Der Tragrost besteht in gleicher Weise wie die dachförmigen Abdeckungen 11 aus Edelstahlblech.

Der Adsorptionsraum 16, also die aktive Zone des Filters, ist durch den Abstand 27 zwischen den oberen Spitzen des Tragrostes 20 und den unteren Spitzen der oberen Einbauten 10 gegeben. Dieser Abstand beträgt je nach Baugröße 200 bis 1000 mm.

Die in an sich bekannter Weise im Bereich der unteren Dachlücken 24 angeordneten Absperrorgane sind, wie erwähnt, als Schieber 25 ausgebildet, die im Falle des Abziehens einer verbrauchten bzw. beladenen Schicht des Adsorptionsmittels die Dachlücken 24 vollständig freigeben und damit ein störungsfreies Herausrieseln des Adsorptionsmittels unter den Bedingungen des Masseflusses ermöglichen. Hierzu sind die Schieber untereinander über einen Antrieb (Gestänge oder ein Hebelsystem) 29 verbunden, das von außen von Hand oder motorisch bedienbar ist.

Das durch die Dachlücken 24 hindurchrieselnde Adsorptionsmittel gelangt im freien Fall in den Bedienraum 6, in dem eine oder mehrere Chargen gesammelt und anschließend kontami-

nationsfrei in einen unterhalb des Verschlusses 4 angeordneten Behälter abgelassen werden können.

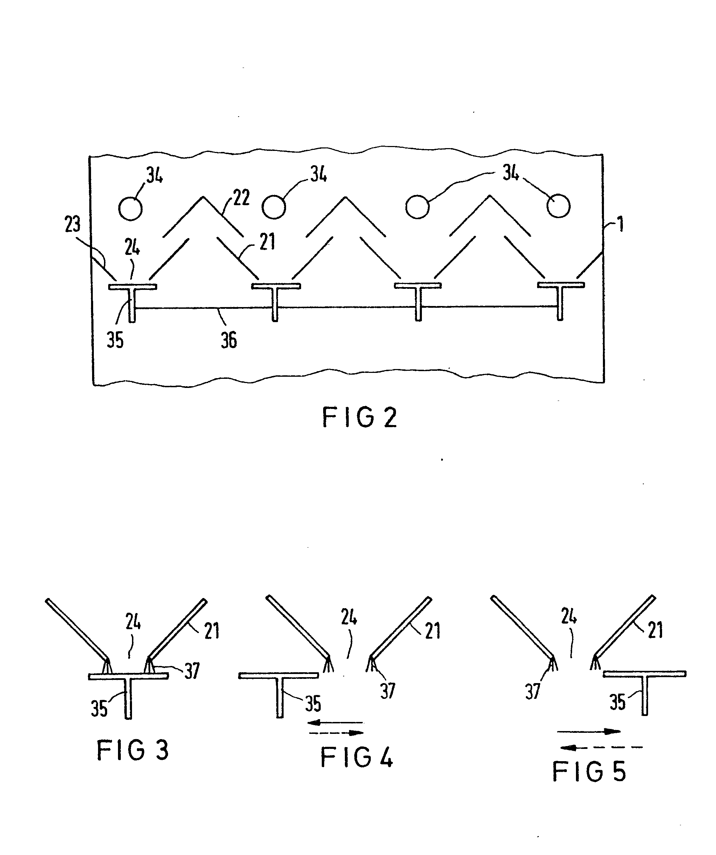

Gemäß der schematischen Darstellung in Fig. 2 ist eine besonders vorteilhafte Ausgestaltung der Schieber 25 dann gegeben, wenn diese jeweils aus einem T-förmigen Profilkörper 35 bestehen, die untereinander über eine Schiene oder Schienen 36 verbunden sind. Hierdurch werden bei geöffneter Schieberstellung Störungen des Fließkegels des herausrieselnden Adsorptionsmittels vermieden. Der Fließvorgang selbst ist bei diesem Beispiel durch runde, rohrartige Fließleitkörper 34 beeinflußt, die zwischen den firstartigen Oberteil 22 sowie zwischen diesen und den Gehäusewänden angeordnet sind. — Weiterhin können gemäß einer weiteren Ausführungsform nach Fig. 3 an den Unterkanten der trapezförmigen Unterteile 21 Kunststoff- oder Stahlbürsten 37 vorgesehen sein, die bei geschlossenem Schieber ein unbeabsichtigtes Abrieseln des Adsorptionsmittels verhindern und gleichzeitig einen ungehinderten Durchtritt des Gases durch die Dachlücken 24 ermöglichen.

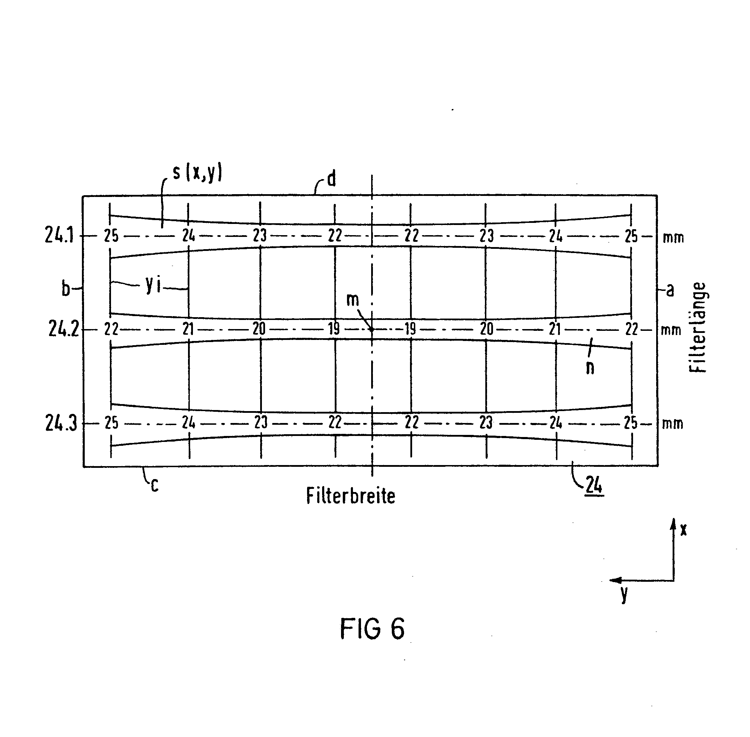

Zum Freigeben und Absperren der Dachlücken 24 ist der Antrieb 29 für die Schieber 35 zweckmäßig derart ausgebildet, daß die Schieber 35 gemäß Fig. 4 und 5 abwechselnd auf die eine Seite und auf die andere Seite der jeweiligen Dachlücke 24 verschoben werden können. Dadurch ist gewährleistet, daß die einzelnen Zonen der Dachlücken eine in der Summe einheitliche Öffnungszeit aufweisen. Für diesen Betrieb der Schieber empfiehlt es sich, den Behälter 1 mit nicht dargestellten Ausbuchtungen zu versehen, damit der jeweils außenliegende Schieber, wenn er in Richtung auf die Behälter verschoben wird, die jeweilige Dachlücke auch vollständig freigeben kann.

Eine hin- und hergehende Bewegung von Durchsatzstellorganen in Form eines Leistenfeldes, bestätigt von einem Exzenterantrieb, ist durch die eingangs an vierter Stelle genannten US-PS 1 095 676 bekannt. Dort soll durch die kurz oberhalb von Stauflächen und kurz unterhalb von Dachlücken angeordneten Leisten das Abrieseln von auf den Stauflächen sich ausbildenden Schüttkegeln bewirkt werden; es geht dort im Gegensatz zur Erfindung nicht darum, die Dachlücken durch Schieber hinsichtlich der Filtermasse vollständig abzuschließen oder frei zu geben.

Eine dritte Ausführungsvariante für das Filter nach Fig. 1 zeigt Fig. 6, und zwar in einem Querschnitt durch den Behälter 1 in Höhe der Dachlücken 24 des Tragrostes 20. Man erkennt, daß die Dachlücken 24 vom Rand (Längsseiten a, b) bis hin zur vertikalen Mittenebene m angenähert hyperbolisch verengt sind. Für das in Fig. 1 dargestellte Adsorptionsfilter und den ihm zugrunde liegenden Abmessungen sind günstige Spaltweiten s (x, y) in mm in Fig. 6 an repräsentativen, parallel zu den Filterlängsseiten a, b verlaufenden Schnittebenen $y_i$ eingetragen. Es sind acht solcher Schnittebenen $y_i$ eingezeichnet. Die Spaltweite s hängt, wie es der Ausdruck s (x, y) verdeutlicht, jedoch nicht nur von der y-Koordinate ab, die in Richtung der Filterbreite c bzw. d orientiert ist, sondern auch von der x-Koordinate, die parallel zu der Filterlängsseite a bzw. b verläuft (vergleiche das kleine Koordinatenkreuz x/y). Allgemein läßt sich sagen, daß von den über die Filtergrundfläche verteilten Dachlücken 24, wobei die drei Dachlücken in Fig. 6 mit 24.1, 24.2, 24.3 bezeichnet sind, diejenigen im Mittenbereich, nämlich 24.2, mit ihren kleinsten, größten und dazwischenliegenden Spaltweiten kleiner bemessen sind als die entsprechenden kleinsten, größten und dazwischenliegenden Spaltweiten der Dachlücken 24.1, 24.3 im Randbereich. Für letztere ergibt sich von der engsten Stelle der Dachlücke im Mittenbereich zum Randbereich folgende Staffelung der Spaltweiten (in mm): 22—23—24—25. Für die etwas engere mittlere Dachlücke 24.2, die sich beidseits der mittleren Symmetrieebene n erstreckt, ergibt sich analog der folgende Anstieg von der Mitte zum Randbereich: 19—20—21—22. Das vorstehend anhand der Fig. 6 für den Tragrost 20 mit seinen Dachlücken 24 Erläuterte gilt sinngemäß auch für die oberen Einbauten mit ihren Dachlücken 18, so daß von einer diesbezüglichen Darstellung abgesehen werden kann. Wie bereits eingangs erwähnt, wird durch die angenähert hyperbolische Verengung der Dachlücken vom Rand zur Mitte bzw. Erweiterung vom Mittenbereich zum Rand den Wandreibungsverlusten des Adsorptionsmittels im Randbereich Rechnung getragen, d. h. eine Kompensation der Wandreibung im Sinne der Erzielung möglichst planparalleler Schichten beim Vorschub der Filterschicht erzielt. Der Spaltweitenverlauf ist abhängig von der Größe des Behälters und der Filterschicht; zur experimentellen Ermittlung der genauen Spaltweiten-Werte kann man an einem mit einer durchsichtigen Glaswand abgeschlossenen Filtermodell gut erkennen, inwieweit der erwünschte Massenfluß erzielt ist.

Die anhand von Fig. 1—6 beschriebenen Abmessungen und Dachneigungen der oberen Einbauten 10 und des Tragrostes 20 geben bevorzugte Ausführungsbeispiele an; es versteht sich, daß diese im Rahmen der Ansprüche variiert werden können. Die symmetrischen Dächer 21, 22 sind in bevorzugter Ausführung, wie dargestellt, zweiteilig; der Effekt der Gaseinleitung parallel zu bzw. unabhängig von den Dachlücken 24 wird auch erreicht, wenn die symmetrischen Dächer 21, 22 mehr als zweiteilig, z. B. dreiteilig sind, was bei Filtern mit einer größeren Grundfläche zur gleichmäßigen Gasverteilung vorteilhaft sein kann.

**Patentansprüche**

1. Wanderbettfilter zur Reinigung von gas- und/oder dampfförmigen Medien, insbesondere Adsorptionsfilter, mit vorzugsweise diskontinuierlicher Strömung des Schüttgutes bzw. Adsorptionsmittels von oben nach unten und kontinuierlicher Strömung des zu filternden Gases von unten nach oben, bestehend aus einem vorzugsweise rechteckigen, mit dem Adsorptionsmittel gefüllten Behälter mit mindestens einer deckseitigen, verschließbaren Einlaßöffnung zum Zuführen des Adsorptionsmittels und einem sich nach unten verjüngenden, eine absperrbare Auslaßöffnung für das Adsorptionsmittel enthaltenden Boden,

bei dem sich die Zuführungen für das Gas im Bodenbereich befinden und die Abgasrohre im oberen Bereich des Behälters sich von einer Behälterwand zur gegenüberliegenden Behälterwand parallel zueinander erstreckend angeordnet sowie auf ihren Zu- und Abströmseiten mit einer oberen Dach- bzw. einer unteren V-Profil-Abdeckung versehen sind, welche Abdeckungen als strömungsvergleichmäßigende symmetrische Fließkörper für das Adsorptionsmittel dienen,

und bei dem im unteren Bereich des Behälters weitere Einbauten in Form eines Tragrostes zur Vergleichmäßigung des Fließverhaltens des Adsorptionsmittels über den gesamten Querschnitt des Behälters vorgesehen sind, dadurch gekennzeichnet, daß bei jedem Abgasrohr (10) an seine obere, einen dachförmigen, symmetrischen Fließleitkörper bildende Abdeckung (11) sich die nach unten gerichtete V-förmige Abdeckung (12) anschließt und siebartig ausgebildet ist, wobei die Achsabstände (17) der oberen Abdeckungen (11) das vier- bis zehnfache der Weite der Dachlücke (18) zwischen zwei benachbarten Fließleitkörpern bzw. zwischen einem Fließleitkörper und der Behälterwand betragen und die Dachkanten (13) jeder oberen Abdeckung die jeweilige nach unten gerichtete Abdeckung überragen, daß der Tragrost (20) aus jalousieartigen mindestens zweiteiligen, symmetrischen Dächern mit einem trapezförmigen Unterteil (21) und einen firstartigen Oberteil (22) besteht, die jeweils senkrecht unter einem Abgasrohr und parallel zu diesem derart angeordnet sind, daß deren Achsabstände (19) das vier- bis zehnfache der Weite der unteren Dachlücke (24) zwischen zwei benachbarten jalousieartigen Dächern bzw. zwischen einem jalousieartigen Dach und der Behälterwand betragen und daß die unteren Dachlücken (24) zwischen den jalousieartigen Dächern mit untereinander gekoppelten, an der Unterseite des Tragrostes (20) angeordneten Schiebern (25) absperrbar sind.

2. Adsorptionsfilter nach Anspruch 1, dadurch gekennzeichnet, daß die Breite der Dachlücken (18, 24) 15 bis 50 mm beträgt.

3. Adsorptionsfilter nach Anspruch 2, dadurch gekennzeichnet, daß die obere Dachlücke (26) zwischen zwei benachbarten jalousieartigen Dächern (21, 22) 50 bis 100 mm beträgt.

4. Adsorptionsfilter nach einem der Ansprüche 1 bis 3, dadurch gekennzeichnet, daß die Dachlücken (24, 18) zwischen den jalousieartigen Dächern (21, 22) und/oder den oberen Abdeckungen (11) vom Rand zur Mitte des Behälters hin angenähert hyperbolisch verengt sind.

5. Adsorptionsfilter nach einem der Ansprüche 1 bis 4, dadurch gekennzeichnet, daß zwischen den firstartigen Oberteilen (22) der jalousieartigen Dächer und zwischen diesen Oberteilen und der jeweiligen Behälterwand oberhalb der unteren Dachlücken (24) zusätzliche Fließleitkörper (34) angeordnet sind.

6. Adsorptionsfilter nach Anspruch 5, dadurch gekennzeichnet, daß die zusätzlichen Fließleitkörper (34) spitzdachartig oder im Querschnitt als auf die Spitze gestelltes Quadrat oder vieleckig oder rund ausgebildet sind.

7. Adsorptionsfilter nach einem der Ansprüche 1 bis 6, dadurch gekennzeichnet, daß die oberen, dachförmigen Abdeckungen (11) und der Tragrost (20) aus Edelstahlblech bestehen und einen Neigungswinkel von etwa 45° aufweisen.

8. Adsorptionsfilter nach einem der Ansprüche 1 bis 7, dadurch gekennzeichnet, daß der Spitzenwinkel der Flächen der V-förmigen Abdeckungen (12) kleiner ist als der Spitzenwinkel der dachförmigen Abdeckungen (11).

9. Adsorptionsfilter nach einem der Ansprüche 1 bis 8, dadurch gekennzeichnet, daß die Schieber (25, 35) auf beide Seiten der jeweiligen Dachlücken (24) verschiebbar sind.

10. Adsorptionsfilter nach Anspruch 9, dadurch gekennzeichnet, daß die Schieber (25, 35) beim Freigeben der Dachlücken (24) abwechselnd auf die eine Seite und auf die andere Seite verschiebbar sind.

11. Adsorptionsfilter nach einem der Ansprüche 1 bis 10, dadurch gekennzeichnet, daß jeder Schieber von dem Querstück eines T-förmigen Profilkörpers (35) gebildet wird.

12. Adsorptionsfilter nach Anspruch 11, dadurch gekennzeichnet, daß die unteren Dachkanten der trapezförmigen Unterteile (22) der jalousieartigen Dächer mit auf den Schiebern (35) aufsitzenden schmalen Bürsten (37) versehen sind.

13. Adsorptionsfilter nach Anspruch 4, dadurch gekennzeichnet, daß von den über die Filtergrundfläche verteilten Dachlücken (24, 18) diejenigen im Mittenbereich (z. B.: 24.2, Fig. 6) mit ihren kleinsten, größten und dazwischenliegenden Spaltweiten kleiner bemessen sind als die entsprechenden kleinsten, größten und dazwischenliegenden Spaltweiten der Dachlücken im Randbereich (24.1 und 24.3, Fig. 6).

**Claims**

1. A moving bed filter for purifying gaseous and/or vaporous media, in particular an adsorption filter, with preferably discontinuous flow of the loose material or adsorption means, as the case may be, from the top to the bottom and a continuous flow of the gas to be filtered from the bottom to the top, said filter consisting of a container, which is preferably rectangular, which is filled with the adsorption means and has at least one closable inlet opening at the cover side for the supply of the adsorption means and a downwardly tapering floor which contains a closable outlet opening for the adsorption means, wherein the supply pipes for the gas are located in the floor region and the exhaust gas pipes are arranged in the upper region of the container so as to extend parallel to one another from one wall of the container to the opposite wall thereof, and at their inlet and outlet ends the exhaust gas pipes are provided with an upper roofshaped covering and a lower V-profiled covering, which coverings serve as flow-equalising symmetrical flow bodies for the adsorption means, and wherein in the lower region of the container, there are arranged further inserts in the form of a supporting grating for rendering uniform the flow behaviour of the adsorption means over the entire cross-section of the container, characterised in that in the case of each exhaust gas pipe (10), the covering (12) in the form of a downwardly-directed V is joined to its upper covering (11) which forms a roof-shaped, symmetrical flow guide body said covering (12) is sieve-like, where the distances (17) between the apexes of the upper coverings (11) are from four to ten times the width of the gap (18) between two adjacent flow guide bodies, or between a flow guide body and the container wall, and the roof edges (13) of each upper covering project over the respective downwardly-directed covering; that the supporting grating (20) consists of louvre-like, at least two-part symmetrical roofs which have a trapezoidal lower part 21 and a ridge-like upper part 22 which are respectively arranged vertically below an exhaust gas pipe and parallel thereto in such a way that the distances (19) between the apexes of the roofs are four to ten times the width of the lower roof gap (24) between two adjacent louvre-like roofs, or between a louvre-like roof and the container wall; and that the lower roof gaps (24) between the louvre-like roofs can be closed by means of slides (25) which are coupled to one another and arranged on the underside of the supporting grating (20).

2. An adsorption filter as claimed in claim 1, characterised in that the width of the roof gaps (18, 24) is 15 to 50 mm.

3. An adsorption filter as claimed in claim 2, characterised in that the upper roof gap (26) between two adjacent louvre-like roofs (21, 22) is 50 to 100 mm.

4. An adsorption filter as claimed in one of claims 1 to 3, characterised in that the roof gaps (24, 18) between the louvre-like roofs (21, 22) and/or the upper coverings (11) decrease approximately hyperbolicallay from the edge to the centre of the container.

5. An adsorption filter as claimed in one of claims 1 to 4, characterised in that additional flow guide bodies (34) are arranged above the lower roof gaps (24), between the ridge-shaped upper parts (22) of the louvre-like roofs and between the upper parts and the respective container wall.

6. An adsorption filter as claimed in claim 5, characterised in that the additional flow guide bodies (34) are formed like a pointed roof, or in cross-section as a square standing on a corner, or polygonal or round.

7. An adsorption filter as claimed in one of claims 1 to 6, characterised in that the upper roofshaped coverings (11) and the supporting grating (20) are made of high-grade steel plate and have an angle of inclination of approximately 45°.

8. An adsorption filter as claimed in one of claims 1 to 7, characterised in that the vertex angle of the surfaces of the V-shaped coverings (12) is smaller than the vertex angle of the roofshaped coverings (11).

9. An adsorption filter as claimed in one of claims 1 to 8, characterised in that the slides (25, 35) are displaceable on both sides of the respective roof gaps (24).

10. An adsorption filter as claimed in claim 9, characterised in that to free the roof gaps (24), the slides (25, 35) are alternately displaceable at the one side and at the other side.

11. An adsorption filter as claimed in one of claims 1 to 10, characterised in that each slide is formed by the transverse piece of a body having a T-shaped profile (35).

12. Ad adsorption filter as claimed in claim 11, characterised in that the lower roof edges of the trapezoidal lower parts 22 of the louvre-like roofs are provided with narrow brushes (37) which bear on the slides (35).

13. An adsorption filter as claimed in claim 4, characterised in that of the roof gaps (24, 18) which are distributed over the filter floor, those in the central region (e. g.: 24.2, fig. 6) have smallest, largest and intermediate gap widths which are respectively smaller than the corresponding smallest, largest and intermediate gap widths of the roof gaps in the edge regions (24.1 and 24.3, fig. 6).

## Revendications

1. Filtre à lit mobile pour épurer des milieux sous forme de gaz et/ou de vapeur, notamment filtre d'adsorption, avec écoulement, de préférence discontinu, du produit en vrac ou de l'agent adsorbant de haut en bas et écoulement continu du gaz à filtrer de bas en haut, constitué d'un récipient, de préférence rectangulaire, empli de l'agent adsorbant et ayant au moins une ouverture d'entrée, du côté du sommet, qui peut être fermée et qui est destinée à introduire l'agent adsorbant, et une ouverture de sortie qui se rétrécit vers le bas, qui peut être obturée et qui est ménagée dans le fond contenant l'agent adsorbant, dans lequel les conduits d'amenée du gaz se trouvent dans la région du fond et les tuyaux pour le gaz d'évacuation sont disposés dans la partie supérieure du récipient en s'étendant parallèlement les uns aux autres d'une paroi du récipient à la paroi opposée et sont munis sur leurs côtés en amont et en aval d'une couverture supérieure en forme de toit et d'une couverture inférieure à profil en V respectivement, qui servent de corps d'écoulement symétriques uniformisant l'écoulement de l'agent adsorbant, et dans lequel il est prévu, dans la partie inférieure du récipient, d'autres pièces rapportées sous forme d'une grille-support pour uniformiser le comportement à l'écoulement de l'agent d'adsorption sur l'ensemble de la section transversale du récipient, caractérisé en ce que, pour chaque tuyau (10) pour le gaz d'évacuation, la couverture (12) en forme de V dirigée vers le bas est constituée en tamis et se raccorde à sa couverture (11) supérieure formant un corps symétrique en forme de toit de guidage de l'écoulement, les distances (17) entre les axes des couvertures (11) supérieures représentant de 4 à 10 fois la largeur des intervalles (18) entre les toits compris entre deux corps, voisins de guidage de l'écoulement ou entre un corps de déviation de l'écoulement et la paroi du récipient et les bords (13) des toits de chaque couverture supérieure dépassant la couverture conjuguée dirigée vers le bas, en ce que la grillesupport (20) est constituée de toits symétriques de type à jalousie, au moins en deux parties, ayant une partie inférieure (21) en forme de trapèze et une partie supérieure (22) en forme de faîte, qui sont disposées en dessous à la verticale d'un tuyau pour le gaz d'évacuation et parallèlement à celui-ci de manière à ce que les distances entre leurs axes (19) représentent de 4 à 10 fois la largeur des intervalles inférieurs (24) entre les toits compris entre deux toits voisins de type à jalousie ou entre un toit de type à jalousie et la paroi de récipient et en ce que les intervalles inférieurs (24) entre les toits compris entre les toits de type à jalousie peuvent être obturés par des tiroirs (25) accouplés les uns aux autres et disposés sur le côté inférieure de la grille-support (20).

2. Filtre d'adsorption suivant la revendication 1, caractérisé en ce que la largeur des intervalles entre les toits (18, 24) est comprise 15 et 50 mm.

3. Filtre d'adsorption suivant la revendication 2, caractérisé en ce que l'intervalle supérieur (26) entre les toits compris entre deux toits (21, 22) voisins de type à jalousie, est compris entre 50 et 100 mm.

4. Filtre d'adsorption suivant l'une des revendications 1 à 3, caractérisé en ce que les intervalles (24, 18) entre les toits compris entre les toits (21, 22) de type à jalousie et/ou les couvertures (11) supérieures se rétrécissent à peu près hyperboliquement en allant du bord au milieu du récipient.

5. Filtre d'adsorption suivant l'une des revendications 1 à 4, caractérisé en ce que entre les parties supérieures (22) de type en faîte des toits de type à jalousie et entre ces parties supérieures et la paroi correspondante du récipient, des corps supplémentaire de guidage de l'écoulement (34) sont disposés au dessus des intervalles inférieurs (24) entre les toits.

6. Filtre d'adsorption suivant la revendication 5, caractérisé en ce que les corps supplémentaires de guidage de l'écoulement (34) sont constitués en forme de toit pointu ou, en section droite, sous la forme d'un carré ou d'un polygone posé sur la pointe ou sous forme ronde.

7. Filtre d'adsorption suivant l'une des revendications 1 à 6, caractérisé en ce que les couvertures (11) supérieures en forme de toit et la grille-support (20) sont en tôle en acier fin et présentent un angle d'inclinaison de 45° environ.

8. Filtre d'adsorption suivant l'une des revendications 1 à 7, caractérisé en ce que l'angle au sommet des surfaces des couvertures (12) en forme de V est inférieur à l'angle au sommet des couvertures (11) en forme de toit.

9. Filtre d'adsorption suivant l'une des revendications 1 à 8, caractérisé en ce que les tiroirs (25, 35) peuvent coulisser des deux côtés des intervalles (24) entre les toits.

10. Filtre d'adsorption suivant la revendication 9, caractérisé en ce que les tiroirs (25, 35) peuvent coulisser alternativement d'un côté et de l'autre lors du dégagement des intervalles (24) entre les toits.

11. Filtre d'adsorption suivant l'une des revendications 1 à 10, caractérisé en ce que chaque tiroir est formé par la partie transversale d'un corps profilé (35) en forme de T.

12. Filtre d'adsorption suivant la revendication 11, caractérisé en ce que les bords inférieurs du toit des parties inférieures (22) en forme de trapèze des toits de type à jalousie sont munis de petites brosses (37) reposant sur les tirois (35).

13. Filtre d'adsorption suivant la revendication 4, caractérisé en ce que parmi les intervalles (24, 18) entre les toits répartis sur la surface de base du filtre, ceux dans la région centrale (28, 24.2 fig. 6) ont des largeurs de fentes les plus petites, les plus grandes et intermédiaires plus petites que les largeurs de fente correspondantes le plus petites, les plus grandes et intermédiaires des intervalles entre toits dans la région marginale (24.1 et 24.3 fig. 6).

FIG 1

FIG 2

FIG 3

FIG 4

FIG 5

FIG 6